# EUROPEAN PATENT SPECIFICATION

(11) **EP 1 433 992 B1**
(45) Date of publication and mention of the grant of the patent: **16.11.2011**
(21) Application number: 03257964.1
(22) Date of filing: 17.12.2003
(51) Int. Cl.: F16L 37/092

(54) **Pipe coupling**
Rohrkupplung
Raccord de tuyau

(30) Priority: 17.12.2002 GB 0229387
(43) Date of publication of application: 30.06.2004
(73) Proprietor: Polypipe Limited, Edlington Doncaster, DN12 1ES (GB)
(72) Inventor: Millward, Keith, Doncaster DN12 1ES (GB)
(74) Representative: Evans, Claire

(56) References cited:
- EP-A- 0 558 844
- EP-A- 0 945 662
- DE-A- 3 018 077
- GB-A- 2 301 158

## Description

The invention relates to a pipe coupling, in particular a pipe coupling with provision for release of a pipe therefrom.

Releasable pipe couplings are known having a body having an aperture for receiving a pipe, a collet within the aperture for releasably securing the pipe in the aperture, the collet including a release part for releasing the pipe by axially applied inward pressure. A problem experienced with such couplings is one of accidental release, wherein the release part is activated inadvertently leading to leakage. Various attempts have been made to solve this problem, but most compromise the functionality of the original concept, making the couplings more expensive to produce, more complicated to install and in some cases, more difficult to release.

Document EP0945662 describes a tube coupling comprising a collet for locking the tube in a coupling body.

It is an object of the present invention to provide a pipe coupling which overcomes problems associated with existing couplings.

According to the present invention there is provided a pipe coupling, as defined in claim 1.

This provides a compact structure which requires a positive action, i.e. movement of the guard by a user, to release the pipe. The guard comprises a ring, the ring and the mouth of the aperture comprising axially extending cooperating guide parts to allow for rotation of the ring. This contributes to the provision of a positive action required for release.

The coupling may include a removeable cap mounted to define the aperture and the guard may be disposed between the release part and the cap. The provision of a coupling having a removable cap allows for access to the interior of the coupling for example to replace components such as seals.

The guard may be moveable between the release and non-release positions by moving it in a plane substantially transverse to the axis of the coupling. In particular the guard may be moveable between the release and non-release positions by rogation about the axis of the coupling. This provides a structure which does not need to be of any greater diameter than the usual diameter of prior art pipe couplings. Rotation of the guard clockwise and anticlockwise may serve to move the guard axially toward and away from the body, or vice versa.

There may be a substantially flat land at the bottom and/or at the top of the said ramp. The ramp may be disposed about the mouth of the aperture and the ramp follower may be disposed on the ring, or vice versa. In a particularly preferred embodiment there may be a plurality of ramps and a plurality of ramp followers.

The or each ramp may be arranged around an axially extending cylindrical projection from around the circumference of the aperture, the diameter of the projection being such as to allow it to fit within the ring. This helps with retention of the ring, the outer surface of the cylindrical proj ection providing a guide for the axial movement of the ring.

According to a further aspect of the invention there is provided a fitting for use in a water supply system, including a coupling as set out hereinabove.

The invention will further be described by way of example and with reference to the following drawings in which:
Figure 1 is a longitudinal sectional view of a pipe coupling according to the invention, shown in a pipe release position;
Figure 2 is a view of the pipe coupling of Figure 1 shown in a non-release position;
Figure 3 is a schematic representation of a part of the pipe coupling of Figure 1;
Figure 4 is an enlarged view of a part of the pipe coupling of Figure 1;
Figure 5 is an enlarged view of a further part of the pipe coupling of Figure 1, and
Figure 6 is an alternative view of the part shown in Figure 5.

Referring to the drawings there is illustrated a pipe coupling 1, comprising a body 2 having a bore 3 for receiving a pipe (not shown), a collet 4 within the bore for releasably securing the pipe in the aperture, the collet including a release part 5 disposed outside of the aperture for releasing the pipe by axially applied inward pressure thereto and a guard 6, disposed between the release part and the mouth of the bore and moveable between a pipe release position wherein axial inward movement of the collet is allowed and a pipe non-release position wherein axial inward movement of the collet is prevented.

The invention is embodied in the present example in the form of a coupling 1 which is used to releaseably join pipes and fittings in a water supply system. For clarity, one end of a coupling is illustrated. It will be appreciated however that this invention is applicable to many different configurations of couplings such as straight, 90° and couplings including greater than one bore, and could be made as part of a fitting, such as a tap, for use in a water supply system.

The coupling 1 includes a body 2 having a cylindrical middle section 8 having a first diameter bordered by a circumferential flange 9 of wider diameter and an end section 10 of similar diameter to the middle section 8 and having on its outer surface a screw thread 11. The end section 10 has placed upon it in screw threaded engagement an end cap 12. The end cap 12 comprises a first cylindrical portion 13 having an internal screw thread dimensioned to screw on to the corresponding screw thread 11 of the end section 10, an end wall 34 extending radially inwardly from one end and defining an aperture 34a and an axially extending cylindrical projection extending through the aperture 34a and terminating in a tapered surface 14 within the cylindrical portion 13.

When assembled with the cap 12 in place on the coupling 1 a bore, is defined. The bore 3 is dimensioned to accommodate a pipe of a given diameter and includes, a shoulder 21 as a pipe stop.

The coupling 1 has a collet 4 which comprises four resilient, axially extending arms 22 extending from a ring 23. The ring 23 has a circumferential flange 24 substantially normal to the axis of the arms. Each arm 22 has towards its distal end a thickening, with a nib 25, an outer cam surface 26 and metal inserts forming teeth 27. By virtue of the fact that they are resilient the arms 22 can be radially compressed inwardly or radially expanded outwardly. The flange 24 extends a sufficient distance radially from the ring 23 to ensure that when the collet is inserted into the-aperture 34a. it cannot pass all of the way in.

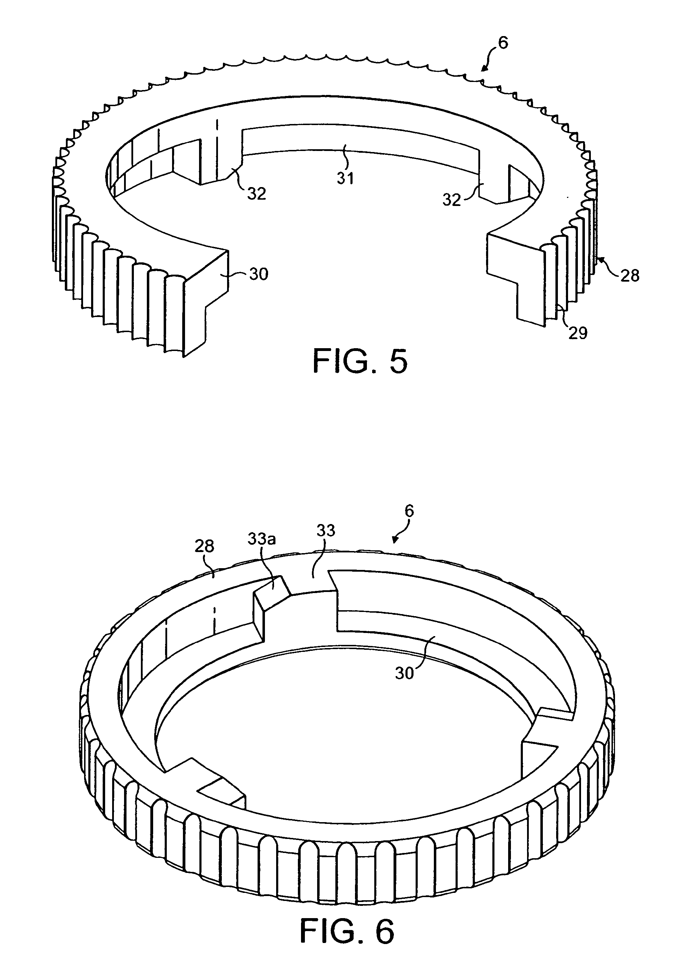

The pipe coupling 1 is provided with a guard 6 in the form of a ring or washer interposed between the mouth of the aperture 34a as defined by the end cap 12 and the release part 5 of the collet 4. The ring is illustrated in Figures 5 and 6. It comprises a wall 28 including a knurled outer surface 29 and a flange 30 extending radially inwardly from the wall and dimensioned to allow the ring 6 to be placed onto the axially extending cylindrical projection 7 around the circumference of the aperture 34a. The inner surface 31 of the ring is provided with three equally spaced tabs 32 which extend from the inner surface 31 radially inwardly substantially the same distance as the flange 30 and axially from the flange substantially the entire width of the inner surface 31 terminating in a flat area 33 which is flush with the end of the wall 28 for the majority of its extent, but which includes a section which slopes down from the level of the area 33 in the direction of the flange 30.

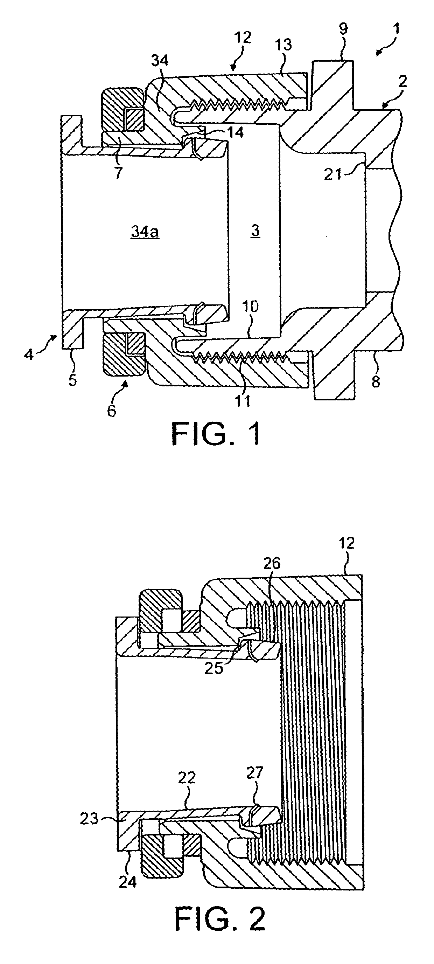

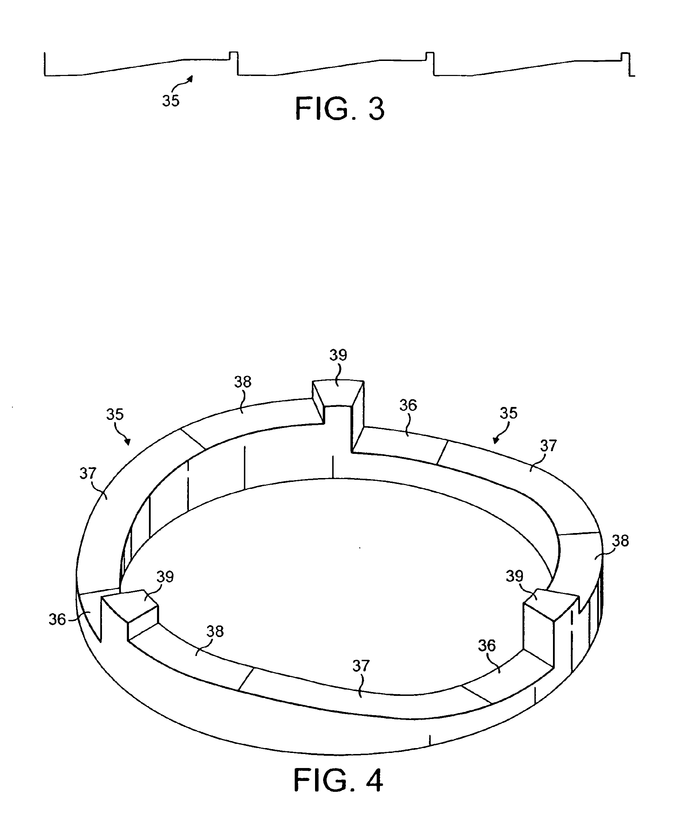

Referring now to Figures 1 to 4, as already mentioned the cap 12 has an axially extending cylindrical projection 7 surrounding the aperture 34a. In the right angle between the cylindrical projection 7 and the end 34 of the cap 12, the cap 12 is provided with three square section arcuate ramps 35 disposed in a ring around the cylindrical projection 7. The profile of the ramps is shown in Figures 3 and 4 with the cylindrical projection 7 removed for clarity. In this embodiment the ramps are joined in the form of a ring but for the purposes of this explanation one ramp 35 will be described, it being understood that the other two are identical. Each ramp 35 comprises a lower, substantially flat land 36, an intermediate inclined portion 37, a higher land 38 and a.stop in the form of an upstand 39.

Together, the tabs 32 of the ring 6 and the ramps 35 comprise cooperating guide parts which allow for rotation of the ring relative to the cap 12. The ring 6 is mounted on the cylindrical projection 7 of the cap 12 with the flange 30 outermost. Thus, the wall 28 of the ring can be received against the end 34 of the cap 12 so that the ramps 35 are received in the spaces between the tabs 32 on the ring 6. The tabs and ramps are dimensioned so that when the tabs are at or adjacent the lower lands 36 the ring 6 is substantially flush with the end 34 (see Figure 1) however when the tabs are at or adjacent the higher lands 38 the ring 6 is positioned axially some distance from the end 34. Thus, it can be seen that the tabs 32 constitute "followers" to the ramps 35 so that rotation of the ring 6 causes it to move axially, the axial position of the ring relative to the ramps being determined by the position of the tabs 32 on the ramps 35. The lower and upper lands 36 and 38 provide positive start and stop positions for the tabs 32, and the inclined portions 33a on the tabs 32 help them move smoothly up and down the ramps 35.

In use, a pipe coupling 1 is assembled as shown in Figures 1 and 2 with the cap 12 screwed on to the corresponding screw thread 11 of the end section 10 of the body 2. A ring 6 is mounted upon the end of the cap as described and a collet 4 is pressed, arms 22 first into the aperture 34a defined by the cap 12. Starting with Figure 1, the release position of the coupling 1 is illustrated. In this position it can be seen that the collet 4 can move axially in the aperture 3. A pipe is inserted into the coupling so that the end butts up against shoulder 21. The components are dimensioned so that entry of the pipe pushes the resilient arms 22 of the collet 4 apart, the teeth 27 lightly biting into its surface. If it is attempted to withdraw the pipe from the coupling 1 the pipe plus loosely attached collet moves axially to the left as viewed so that the surface 14 which causes the teeth to bite further into the surface of the pipe thus impeding its removal. To release the pipe from the coupling the user presses on the flange of the collet 4 to prevent it moving axially to the left as viewed which in turn prevents the nibs 25 of the collet arms 22 coming into contact with the tapered portion 14. In this way the pipe can be withdrawn. Referring now to Figure 2, the non-release position is shown. In this position the ring 6 is rotated so that the tabs 32 move from the low lands 36 to the higher lands 38 which action moves the ring axially towards the release flange of the collet 4. Thus, the collet 4 can no longer be pressed into the pipe coupling 1 and release is prevented.

From the foregoing description it can be seen that the pipe coupling so described substantially solves the problem of accidental release, requiring a positive action by a user to move the guard ring 6 from the release position defined by the low lands of the ramps, to the non-release position defined by the higher lands.

## Claims

1. A pipe coupling (1), comprising a body (2) having an aperture (3) for receiving a pipe, a collet (4) within the aperture for releasably securing the pipe in the aperture, the collet including a release part (5) disposed outside of the aperture for releasing the pipe by axially applied inward pressure thereto, and a guard (6), disposed between the release part and the mouth of the aperture and rotatable between a pipe release position wherein axial inward movement of the collet is allowed and a pipe non-release position wherein axial inward movement of the collet is prevented, **characterised in that:**
the guard comprises a ring, the ring and the mouth of the aperture comprising axially extending cooperating guide parts (32, 35) to allow for rotation of the ring;
the cooperating guide parts comprising a circumferentially extending ramp (35) providing a. radially extending bering surface, which surface includes an inclined portion, inclined relative to a plane perpendicular to the longitudinal axis of the coupling, and a ramp-follower (32).

2. A coupling according to claim 1, including a removable cap (12) mounted to define the aperture, the guard being disposed between the release part and the cap.

3. A coupling according to claim 1 or claim 2, the guard being moveable between the release and non-release positions by moving it in a plane substantially transverse to the axis of the coupling.

4. A coupling according to any preceding claim, the guard being moveable between the release and non-release positions by rotation about the axis of the coupling.

5. A coupling according to claim 4, the rotational movement serving to move the guard axially toward or away from the body.

6. A coupling according to any preceding claim, there being a substantially flat land (36, 38) at the bottom and/or at the top of the said ramp.

7. A coupling according to any of claims 1 to 6, the ramp being disposed about the mouth of the aperture and the ramp-follower being disposed on the ring, or vice versa.

8. A coupling according to any of claims 1 to 7, there being a plurality of ramps and a plurality of ramp-followers.

9. A coupling according to any of claims 1 to 8, the or each ramp being arranged around an axially extending cylindrical projection (39) from around the circumference of the aperture, the diameter of the projection being such as to allow it to fit within the ring.

10. A fitting for use in a water supply system, including a coupling as claimed in any of claims 1 to 9.

## Patentansprüche

1. Rohrkupplung (1), die aufweist: ein Gehäuse (2) mit einem Loch (3) für das Aufnehmen eines Rohres; eine Klemmhülse (4) innerhalb des Loches für das lösbare Sichern des Rohres im Loch, wobei die Klemmhülse ein Freigabeteil (5) umfasst, das außerhalb des Loches für das Freigeben des Rohres durch einen axial darauf angewandten Druck nach innen angeordnet ist; und einen Schutz (6), der zwischen dem Freigabeteil und der Öffnung des Loches angeordnet und zwischen einer Rohrfreigabeposition, in der eine axiale Bewegung der Klemmhülse nach innen gestattet wird, und einer Rohrnichtfreigabeposition drehbar ist, in der die axiale Bewegung der Klemmhülse nach innen verhindert wird, **dadurch gekennzeichnet, dass**:
der Schutz einen Ring aufweist, wobei der Ring und die Öffnung des Loches sich axial erstreckende zusammenwirkende Führungsteile (32, 35) aufweisen, die die Drehung des Ringes zulassen;
die zusammenwirkenden Führungsteile eine sich peripher erstreckende Abschrägung (35), die eine sich radial erstreckende Auflagefläche bereitstellt, wobei die Fläche einen geneigten Abschnitt umfasst, relativ zu einer Ebene senkrecht zur Längsachse der Kupplung geneigt, und einen Abschrägungsfolgebereich (32) aufweisen.

2. Kupplung nach Anspruch 1, die eine entfernbare Kappe (12) umfasst, die montiert ist, um das Loch zu definieren, wobei der Schutz zwischen dem Freigabeteil und der Kappe angeordnet ist.

3. Kupplung nach Anspruch 1 oder Anspruch 2, wobei der Schutz zwischen der Freigabe- und Nichtfreigabeposition beweglich ist, in dem er sich in einer Ebene im Wesentlichen quer zur Achse der Kupplung bewegt.

4. Kupplung nach einem der vorhergehenden Ansprüche, wobei der Schutz zwischen der Freigabe- und Nichtfreigabeposition durch Drehung um die Achse der Kupplung beweglich ist.

5. Kupplung nach Anspruch 4, bei der die Drehbewegung dazu dient, den Schutz axial in Richtung des oder weg vom Gehäuse zu bewegen.

6. Kupplung nach einem der vorhergehenden Ansprüche, wobei eine im Wesentlichen flache Fläche (36, 38) am Boden der und/oder oben auf der Abschrägung vorhanden ist.

7. Kupplung nach einem der Ansprüche 1 bis 6, bei der die Abschrägung um die Öffnung des Loches herum angeordnet ist, und bei der der Abschrägungsfolgebereich auf dem Ring angeordnet ist, oder umgekehrt.

8. Kupplung nach einem der Ansprüche 1 bis 7, bei der eine Vielzahl von Abschrägungen und eine Vielzahl von Abschrägungsfolgebereichen vorhanden sind.

9. Kupplung nach einem der Ansprüche 1 bis 8, bei der die oder jede Abschrägung um einen sich axial erstreckenden zylindrischen Vorsprung (39) um den Umfang des Loches herum angeordnet ist, wobei der Durchmesser des Vorsprunges so ist, dass er innerhalb des Ringes passt.

10. Fitting für eine Verwendung in einem Wasserversorgungssystem, der eine Kupplung nach einem der Ansprüche 1 bis 9 umfasst.

## Revendications

1. Raccord de tuyau (1), comprenant un corps (2) comportant une ouverture (3) pour recevoir un tuyau, un collet (4) dans l'ouverture, pour fixer de manière amovible le tuyau dans l'ouverture, le collet englobant une partie de dégagement (5) agencée à l'extérieur de l'ouverture, pour dégager le tuyau en le soumettant à une pression dirigée vers l'intérieur, à application axiale, et un protecteur (6), agencé entre la partie de dégagement et l'embouchure de l'ouverture et pouvant tourner entre une position de dégagement du tuyau, dans laquelle un déplacement axial vers l'intérieur du collet est possible, et une position de non-dégagement du tuyau, dans laquelle le déplacement axial vers l'intérieur du collet est empêché, **caractérisé en ce que :**
le protecteur comprend une bague, la bague et l'embouchure de l'ouverture comprenant des parties de guidage coopérantes à extension axiale (32, 35) pour permettre la rotation de la bague ;
les parties de guidage coopérantes comprennent une rampe à extension circonférentielle (35), établissant une surface de support à extension radiale, cette surface englobant une partie inclinée, inclinée par rapport à un plan perpendiculaire à l'axe longitudinal du raccord, et un prolongement de la rampe (32).

2. Raccord selon la revendication 1, englobant un capuchon amovible (12) monté de sorte à définir l'ouverture, le protecteur étant agencé entre la partie de dégagement et le capuchon.

3. Raccord selon les revendications 1 ou 2, dans lequel le protecteur peut être déplacé entre les positions de dégagement et de non-dégagement par un déplacement dans un plan pratiquement transversal à l'axe du raccord.

4. Raccord selon l'une quelconque des revendications précédentes, dans lequel le protecteur peut être déplacé entre les positions de dégagement et de non-dégagement par une rotation autour de l'axe du raccord.

5. Raccord selon la revendication 4, dans lequel le déplacement rotatif sert à déplacer le protecteur axialement vers le corps ou à l'écart de celui-ci.

6. Raccord selon l'une quelconque des revendications précédentes, comportant un appui pratiquement plat (36, 38) au niveau de la partie inférieure et/ou de la partie supérieure de ladite rampe.

7. Raccord selon l'une quelconque des revendications 1 à 6, dans lequel la rampe est agencée autour de l'embouchure de l'ouverture, le prolongement de la rampe étant agencé sur la bague, ou vice-versa.

8. Raccord selon l'une quelconque des revendications 1 à 7, comprenant plusieurs rampes et plusieurs prolongements de rampe.

9. Raccord selon l'une quelconque des revendications 1 à 8, dans lequel la ou chaque rampe est agencée autour d'une saillie cylindrique à extension axiale (39) entourant la
circonférence de l'ouverture, le diamètre de la saillie étant tel à permettre son ajustement dans la bague.

10. Robinetterie destinée à être utilisée dans un système d'alimentation en eau, englobant un raccord selon l'une quelconque des revendications 1 à 9.
